# DEMANDE DE BREVET EUROPEEN

(11) **EP 1 511 144 A1**
(43) Date de publication de la demande: **02.03.2005**
(21) Numéro de dépôt: 04291906.8
(22) Date de dépôt: 27.07.2004
(51) Int. Cl.: H02G 3/12

(54) **Boîte d'encastrement à bague de montage**

(30) Priorité: 01.09.2003 FR 0310339
(71) Demandeur: LEGRAND, 87000 Limoges (FR); LEGRAND SNC, 87000 Limoges (FR)
(72) Inventeur: Favalessa, Thierry, 87240 Ambazac (FR); Gourcerol, Jean-Jacques, 87220 Feytiat (FR)
(74) Mandataire: Remy, Fabienne

(57) **Abrégé**

La présente invention concerne une boîte d'encastrement (100) comprenant une paroi latérale (120) qui délimite un logement apte à recevoir au moins un mécanisme d'appareillage électrique et des câbles et/ou des conducteurs électriques nécessaires à la déserte dudit mécanisme d'appareillage

Selon l'invention, ledit logement loge en outre une bague (200) aménagée pour recevoir des moyens de fixation (10) d'au moins un support d'appareillage et comprenant des moyens de montage (204) coopérant avec des moyens de montage complémentaires (121) portés par ladite paroi latérale pour la fixation de la boîte d'encastrement à une paroi.

## Description

La présente invention concerne de manière générale les boîtes d'encastrement pour cloisons sèches, telles que des cloisons alvéolaires.

Elle concerne plus particulièrement une boîte d'encastrement comprenant une paroi latérale qui délimite un logement apte à recevoir au moins un mécanisme d'appareillage électrique et des câbles et/ou des conducteurs électriques nécessaires à la desserte dudit mécanisme d'appareillage.

On connaît déjà, notamment des documents FR 2 670 625 et FR 2 780 567, des boîtes d'encastrement du type précité dont la paroi latérale comporte, sur sa face externe, des renfoncements accueillant des griffes et recevant le corps fileté de vis. Chaque corps fileté de vis coopère individuellement avec une des griffes pour lui faire prendre une position en saillie de la face externe de ladite paroi latérale pour l'ancrage de la boîte d'encastrement à l'intérieur d'un trou d'une paroi.

Ainsi, pour fixer une telle boîte d'encastrement à une paroi, l'installateur doit visser chaque vis dans le sens des aiguilles d'une montre à l'aide d'un tournevis pour faire pivoter chaque griffe d'un quart de tour depuis une position rétractée vers sa position en saillie de la face externe de la paroi latérale de la boîte d'encastrement, et pour faire coulisser chaque griffe en position en saillie dans ledit renfoncement jusqu'à ce qu'elle vienne s'appuyer contre la face interne de la paroi considérée.

Une telle boîte d'encastrement est relativement longue et difficile à mettre en place dans la paroi correspondante du fait du vissage de chacune des vis portant les griffes d'ancrage.

En outre, dans une boîte d'encastrement de ce type, les moyens de montage d'un support d'appareillage sont prévus en surplus des vis coopérant avec les griffes pour l'ancrage de la boîte d'encastrement dans la paroi. Ces moyens de montage sont par exemple des vis de fixation associée ou non à des crans prévus sur la face interne de la paroi latérale de la boîte d'encastrement coopérant avec des griffes d'ancrage du support d'appareillage concerné.

Le montage du support d'appareillage dans ladite boîte d'encastrement représente alors pour l'installateur une opération supplémentaire à celle de la fixation de ladite boîte à la paroi.

Par rapport à l'état de la technique précité, la présente invention propose une nouvelle boîte d'encastrement dont la mise en place par l'installateur dans une paroi est largement simplifiée.

Plus particulièrement, l'invention propose une boîte d'encastrement telle que définie en introduction, caractérisée en ce qu'elle est équipée, avant insertion dans une paroi, d'une bague logée dans ledit logement et aménagée pour recevoir des moyens de fixation d'au moins un support d'appareillage, ladite bague comprenant des moyens de montage coopérant avec des moyens de montage complémentaires portés par ladite paroi latérale pour la fixation de la boîte d'encastrement à une paroi.

Ainsi, avantageusement, la bague de la boîte d'encastrement selon l'invention présente une double fonction, à savoir, celle de recevoir les moyens de fixation d'un support d'appareillage et celle de participer à la fixation de la boîte d'encastrement dans la paroi considérée. L'installateur n'a donc plus à manipuler individuellement une pluralité de vis correspondant à une pluralité de griffes d'ancrage, mais il lui suffit maintenant simplement de bloquer la bague dans ladite boîte d'encastrement conforme à l'invention pour ancrer ladite boîte dans ladite paroi.

D'autres caractéristiques non limitatives et avantageuses de la boîte d'encastrement selon l'invention sont les suivantes :
- lesdits moyens de montage portés par la bague comportent des griffes réparties sur son pourtour, et lesdits moyens de montage complémentaires portés par ladite paroi latérale comprennent des fenêtres au travers desquelles lesdites griffes font saillie de la paroi latérale,
- chaque fenêtre de ladite paroi latérale présente une largeur et une hauteur supérieures à celles de chaque griffe de ladite bague qu'elle reçoit de sorte que ladite bague est apte à être déplacée à rotation dans ledit logement selon un certain débattement angulaire et également en translation selon l'axe de ladite boîte d'encastrement,
- ladite bague est agencée de manière à prendre appui sur un rebord interne prévu sur la face interne de ladite paroi latérale pour limiter son enfoncement dans ledit logement lorsque ledit support d'appareillage n'est pas fixé à ladite bague,
- ladite bague porte des pattes dont le bord libre est apte à prendre appui contre ledit rebord interne,
- chaque griffe est portée par une languette découpée dans chaque patte portée par ladite bague.
- ladite bague comprend ponctuellement au droit desdites griffes des jupes aptes à venir prendre appui sur la face externe de ladite paroi latérale,
- lesdits moyens de montage portés par ladite bague sont des moyens d'actionnement aptes à actionner des griffes prévues sur la face externe de ladite paroi latérale pour les positionner en saillie par rapport à une position d'origine,
- lesdites griffes sont supportées par des languettes flexibles découpées dans ladite paroi latérale,
- lesdits moyens d'actionnement sont adaptés à agir sur des moyens d'actionnement complémentaires prévus sur lesdites languettes flexibles au dos desdites griffes,
- lesdits moyens d'actionnement sont adaptés à agir sur lesdits moyens d'actionnement complémentaires lors d'une rotation de la bague autour de l'axe dudit logement,
- lesdits moyens d'actionnement et lesdits moyens d'actionnement complémentaires comprennent des rampes de came,
- lesdites rampes de came sont prévues aux extrémités de pattes qui s'étendent à partir de ladite bague perpendiculairement à celle-ci et qui sont réparties sur son pourtour,
- lesdits moyens d'actionnement sont adaptés à agir sur lesdits moyens d'actionnement complémentaires lors d'une translation de la bague suivant l'axe dudit logement,
- lesdits moyens d'actionnement comprennent une jupe tronconique,
- lesdits moyens d'actionnement complémentaires comprennent des nervures,
- lesdits aménagements de la bague adaptés à recevoir les moyens de fixation d'un support d'appareillage comprennent au moins deux puits taraudés de réception de vis,
- la bague suit le contour dudit logement,
- la bague est réalisée d'une seule pièce par moulage d'une matière synthétique, et
- la bague et la boîte d'encastrement sont réalisées d'une seule pièce par moulage d'une matière synthétique et sont reliées l'une à l'autre en sortie de moulage par au moins un lien frangible.

La description qui va suivre en regard des dessins annexés non limitatifs fera bien comprendre en quoi consiste l'invention et comment elle peut être réalisée.

Sur les dessins annexés :
- la figure 1 est une vue schématique en perspective d'un premier mode de réalisation de la boîte d'encastrement selon l'invention ;
- la figure 2 est une vue schématique en perspective d'une variante de réalisation de la boîte de la figure 1 ;
- la figure 3 est une vue schématique en perspective éclatée d'un deuxième mode de réalisation de la boîte d'encastrement selon l'invention,
- les figures 4 et 5 sont respectivement des vues schématiques avant et arrière de la boîte de la figure 3 placée dans un trou d'une paroi mais non fixée à celle-ci,
- les figures 6 et 7 sont des vues identiques à celles des figures 4 et 5 de la boîte de la figure 3 fixée à la paroi,
- la figure 8 est une vue schématique en perspective éclatée d'une troisième mode de réalisation de la boîte d'encastrement selon l'invention ;
- la figure 9 est une vue schématique avant de la boîte de la figure 8 placée dans un trou d'une paroi mais non fixée à celle-ci,
- la figure 10 est une vue schématique avant de la boîte de la figure 8 placée dans un trou d'une paroi et fixée à celle-ci ; et
- les figures 11A et 11 B sont des vues en coupe partielle de la boîte de la figure 8, prises au niveau d'une vis de fixation du support d'appareillage, avant et après fixation dudit support à ladite boîte.

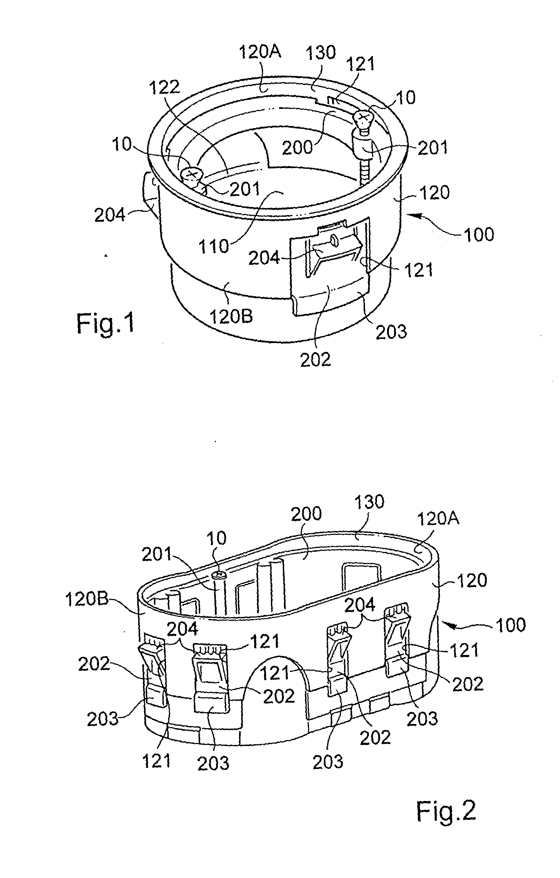

Sur les figures 1 et 2 on a représenté deux variantes d'un premier mode d'une boîte d'encastrement 100 apte à contenir au moins un mécanisme d'appareillage électrique non représenté (un mécanisme pour la boîte de la figure 1 et deux mécanismes pour la boîte de la figure 2), tel qu'un mécanisme d'interrupteur ou d'une prise de courant, ainsi que les câbles et/ou les conducteurs électriques nécessaires à la desserte de chaque mécanisme d'appareillage.

Cette boîte d'encastrement 100 est destinée à être mise en place dans un trou d'une cloison sèche du type cloison alvéolaire.

Elle comprend un fond 110, une paroi latérale 120 cylindrique, qui s'élève à partir du fond 110 et qui délimite un logement, et une ouverture frontale 130 prévue à l'opposé dudit fond 110 pour l'introduction de chaque mécanisme d'appareillage (non représenté) dans ledit logement de la boîte d'encastrement 100.

Selon la variante représentée sur la figure 1, la boîte d'encastrement 100 présente une forme cylindrique de révolution avec un fond 110 et une ouverture frontale 130 circulaires.

Selon la variante représentée sur la figure 2, la boîte d'encastrement 100 présente une forme oblongue.

Avantageusement, selon l'invention, la boîte d'encastrement 100 représentée sur les figures 1 et 2 comprend une bague 200 qui, avant insertion de la boîte dans une paroi quelconque, est logée dans ledit logement. Cette bague 200 est aménagée pour recevoir des moyens de fixation 10 d'au moins un support d'appareillage (non représenté) et comprend des moyens de montage 204 coopérant avec des moyens de montage complémentaires 121 portés par ladite paroi latérale 120 pour la fixation de la boîte d'encastrement 100 à ladite cloison sèche à l'intérieur dudit trou.

Selon une caractéristique de cette bague 200, elle est conformée pour suivre le contour du logement de ladite boîte d'encastrement 100.

Ainsi selon la variante de la figure 1, la bague 200 est circulaire et, selon la variante de la figure 2, la bague 200 est de forme oblongue.

Lesdits aménagements de la bague 200 aptes à recevoir des moyens de fixation d'un support d'appareillage, sont ici des puits taraudés 201 (au moins au nombre de deux) de réception de vis 10.

Lesdits moyens de montage que porte la bague 200 en vue de l'ancrage de la boîte d'encastrement 100 dans ladite cloison sèche comprennent des griffes 204 réparties sur le pourtour de ladite bague 200, et lesdits moyens de montage complémentaires portés par la paroi latérale 120 de la boîte d'encastrement 100 comprennent des fenêtres 121 au travers desquelles lesdites griffes 204 font saillie de ladite paroi latérale 120.

Comme le montrent les figures 1 et 2, avantageusement, chaque fenêtre 121 de ladite paroi latérale 120 présente une largeur et une hauteur supérieures à celles de chaque griffe 204 de ladite bague 200 qu'elle reçoit de sorte que ladite bague 200 est apte à être déplacée suivant le contour dudit logement selon un certain débattement et également en translation selon l'axe de ladite boîte d'encastrement 100. Dans le cas de la figure 1 la bague 200 se déplace à rotation selon un certain débattement angulaire, et dans le cas de la figure 2 la bague 200 se déplace à translation.

En outre, préférentiellement, ladite bague 200 est agencée de manière à prendre appui sur un rebord interne 122 prévu sur la face interne 120A de ladite paroi latérale 120 pour limiter son enfoncement dans ledit logement lorsque ledit support d'appareillage n'est fixé à ladite bague 200.

Ici, ladite bague 200 porte des pattes 202 dont le bord libre est apte à prendre appui contre ledit rebord interne 122.

Chaque griffe 204 est portée par une languette découpée dans chaque patte 202 portée par ladite bague 200.

Préférentiellement, comme le montrent les figures 1 et 2, ladite bague 200 comprend ponctuellement au droit desdites griffes 204 des jupes 203 aptes à venir prendre appui sur la face externe 120B de ladite paroi latérale 120.

La fixation de la boîte d'encastrement 100 à une cloison sèche est réalisée de la manière suivante.

L'installateur réalise à l'aide d'une scie cloche par exemple un trou dont les dimensions correspondent au gabarit de la boîte d'encastrement 100.

Puis il enfonce la boîte d'encastrement 100 équipée de sa bague 200 dans le trou de la cloison sèche de manière à placer les griffes 204 portées par ladite bague 200 en regard de la face arrière de la plaque avant de ladite cloison.

Lors de l'enfoncement de la boîte d'encastrement 100 dans le trou de la cloison sèche, les languettes portant les griffes 204 fléchissent élastiquement et permettent auxdites griffes 204 de se rétracter légèrement vers l'intérieur du logement de ladite boîte d'encastrement 100 pour permettre l'introduction de celle-ci dans ledit trou.

Avantageusement, lesdites jupes 203 limitent le fléchissement desdites languettes portant les griffes 204 et donc l'escamotage desdites griffes 204 lors de l'enfoncement de la boîte d'encastrement 100 dans le trou de la cloison sèche de sorte qu'après le passage de la plaque avant de ladite cloison lesdites griffes 204 reviennent bien se placer dans leur position d'origine en saillie de la paroi latérale 120, en regard de la face arrière de ladite plaque avant.

Puis, l'installateur positionne le ou chaque support d'appareillage contre la face avant de la plaque avant de la cloison sèche de sorte que ses ouvertures de fixation viennent se placer en regard des puits taraudés 201 de ladite bague 200.

Il ajuste éventuellement la position angulaire desdits puits taraudés 201 en déplaçant à rotation dans une certaine mesure la bague 200 dans le logement de la boîte d'encastrement 100 pour corriger l'orientation du support d'appareillage par rapport à la cloison.

Puis il visse chaque vis 10 au travers des ouvertures de fixation du support d'appareillage dans lesdits puits taraudés 201 de la bague 200. Cette action de vissage entraîne le déplacement à translation de la bague 200 vers l'extérieur de la boîte d'encastrement 100 et provoque donc la remonté desdites griffes 204 pour qu'elles viennent se bloquer en appui contre la face arrière de la plaque avant de la cloison sèche.

En une seule étape de vissage, l'installateur solidarise le support d'appareillage à la boîte d'encastrement 100 et fixe cette dernière à la paroi considérée.

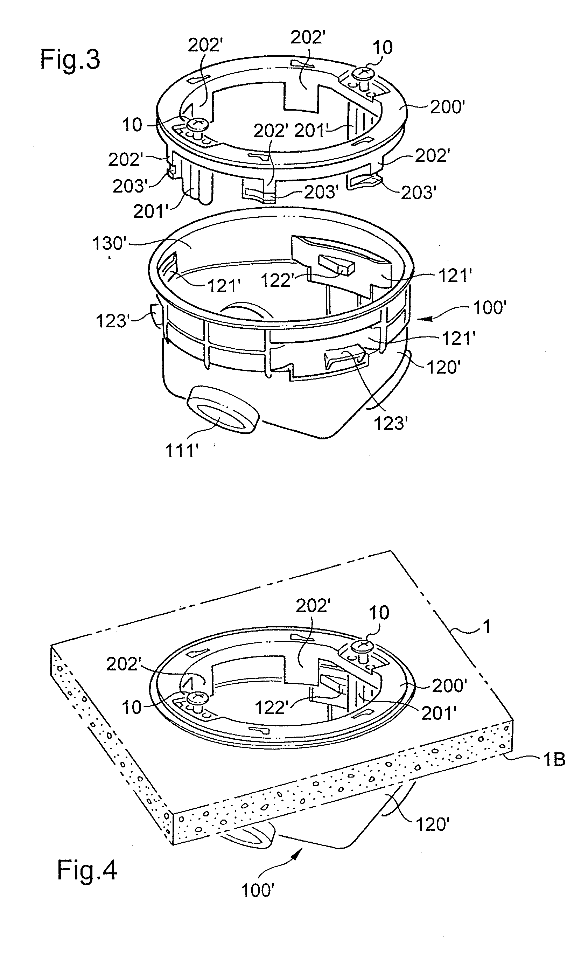

Sur les figures 3 à 7 on a représenté un deuxième mode de réalisation d'une boîte d'encastrement 100', ici de forme globalement circulaire, avec un fond 110', une paroi latérale 120' globalement cylindrique de révolution, qui délimite un logement intérieur, et, à l'opposé du fond 110', une ouverture frontale 130' permettant d'introduire dans ledit logement intérieur au moins un mécanisme d'appareillage.

Le fond 110' comporte des ouvertures 111' d'entrée de gaines d'amenée de câbles et/ou de conducteurs électriques à l'intérieur de ladite boîte d'encastrement 100' pour la desserte électrique du mécanisme d'appareillage qu'elle contient.

La boîte d'encastrement 100' loge également une bague 200' qui suit le contour circulaire dudit logement intérieur.

Cette bague 200', tout comme la bague 200, est aménagée pour recevoir des moyens de fixation d'au moins un support d'appareillage (non représenté) et comprenant des moyens de montage coopérant avec des moyens de montage complémentaires portés par ladite paroi latérale 120' pour la fixation de la boîte d'encastrement 100' à une paroi 1.

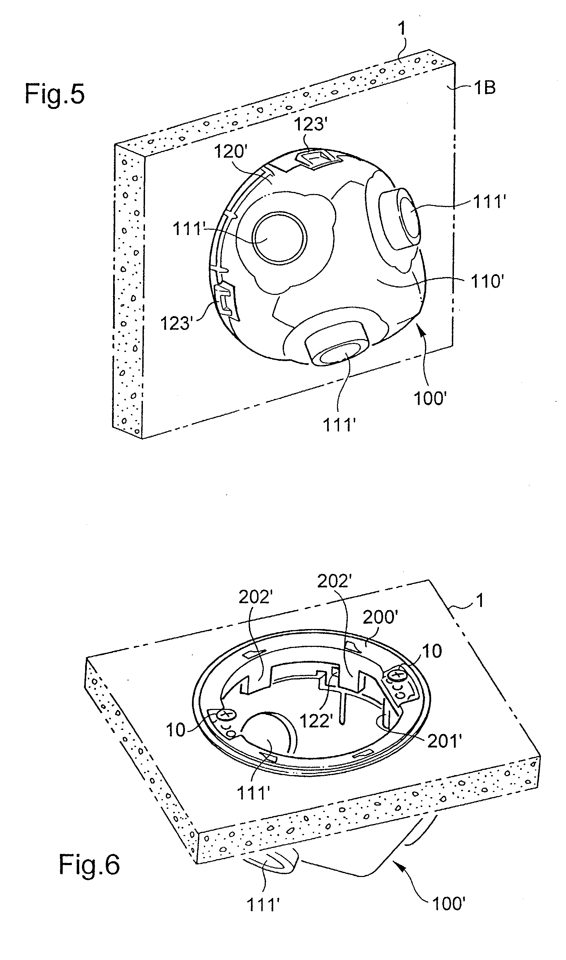

Ici, lesdits moyens de montage sont des moyens d'actionnement aptes actionner des griffes 123' prévues sur la face externe de ladite paroi latérale pour les positionner en saillie par rapport à une position d'origine (voir figure 5).

Comme le montre plus particulièrement la figure 3, lesdites griffes 123' sont supportées par des languettes 121' flexibles découpées dans ladite paroi latérale 120'. Lesdits moyens d'actionnement sont alors adaptés à agir sur des moyens d'actionnement complémentaires prévus sur lesdites languettes 121' flexibles au dos desdites griffes 123'.

Ici, lesdits moyens d'actionnement sont adaptés à agir sur lesdits moyens d'actionnement complémentaires lors d'une rotation de la bague 200' autour de l'axe dudit logement.

Préférentiellement, lesdits moyens d'actionnement et lesdits moyens d'actionnement complémentaires comprennent des rampes de came 203', 122'.

Les rampes de came 203' de la bague 200' sont prévues aux extrémités de pattes 202' qui s'étendent à partir de ladite bague 200' perpendiculairement à celle-ci et qui sont réparties sur son pourtour.

Ici, il est prévu six pattes 202' portant chacune une rampe de came 203' pour trois griffes 123' et donc trois rampes de came 122' complémentaires prévues sur la boîte d'encastrement 100' de sorte que la position angulaire de ladite bague 200' sur ladite boîte d'encastrement peut être ajustée, dans une certaine mesure, pour mettre à d'aplomb le support d'appareillage rapporté sur celle-ci par rapport à la cloison considérée.

Par ailleurs, la bague 200' comporte tout comme la bague 200 des puits taraudés 201' de réception de vis de fixation d'un support d'appareillage.

En référence aux figures 4 à 7, la fixation de la boîte d'encastrement 100' à une cloison sèche 1 est réalisée de la manière suivante.

L'installateur réalise à l'aide d'une scie cloche par exemple un trou dont les dimensions correspondent au gabarit de la boîte d'encastrement 100'.

Puis il enfonce la boîte d'encastrement 100' équipée de sa bague 200' dans le trou de la cloison sèche de manière à placer les griffes 123' portées par ladite paroi latérale 120' en regard de la face arrière 1 B de la plaque avant 1 de ladite cloison (voir figure 5).

Lors de cette étape d'enfoncement, la bague 200' est positionnée dans le logement de la boîte d'encastrement 100' dans une position angulaire telle que les rampes de came 203' qu'elle porte ne coopèrent pas avec lesdites rampes de came 122' prévues sur la boîte aux dos des griffes 123' et ces dernières sont donc positionnées dans une position d'origine d'attente.

Lors de l'enfoncement de la boîte d'encastrement 100' dans le trou de la cloison sèche, les languettes 121' portant les griffes 123' fléchissent élastiquement et permettent auxdites griffes 123' de se rétracter légèrement vers l'intérieur du logement de ladite boîte d'encastrement 100' pour permettre l'introduction de celle-ci dans ledit trou.

On peut également prévoir selon une variante non représentée que les griffes s'inscrivent dans le gabarit du trou pratiqué dans la cloison sèche et que de ce fait lors de l'enfoncement de la boîte d'encastrement dans ledit trou, elles n'ont pas à se rétracter pour permettre l'introduction de celle-ci dans ce dernier.

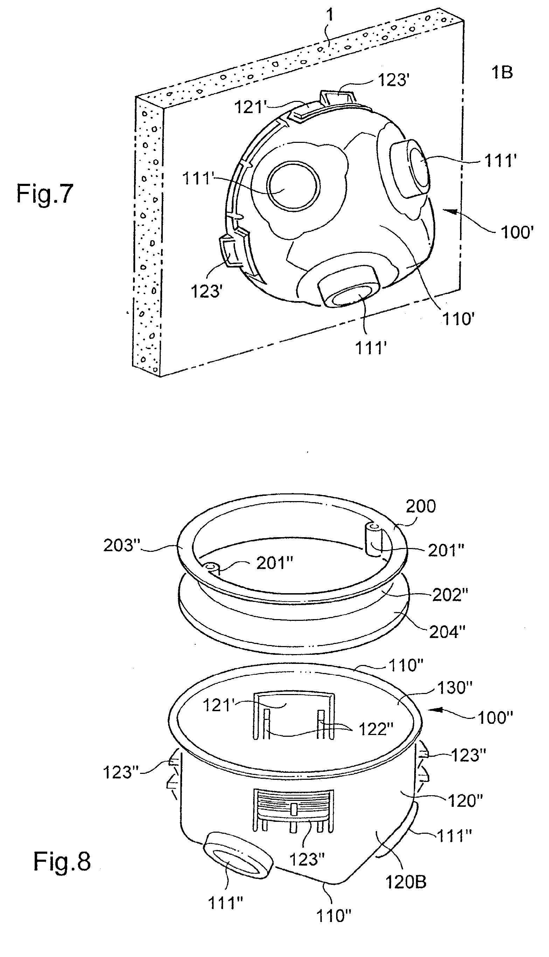

Puis l'installateur fait tourner la bague 200' d'un quart de tour dans le logement de la boîte d'encastrement 100' (voir figure 6) pour faire coopérer les rampes de cames 203' portées par la bague 200' avec celles qui sont portées par la paroi latérale 120' pour déformer élastiquement lesdites languettes 121' et pousser vers l'extérieur lesdites griffes 123' afin qu'elles prennent une position en saillie par rapport à leur position d'origine, en appui contre la face arrière 1 B de la plaque avant 1 de la cloison sèche (voir figure 7).

La boîte d'encastrement 100' est bloquée dans le trou de la cloison sèche et la bague 200' est immobilisée dans ledit logement et est prête à recevoir le support d'appareillage correspondant.

Sur les figures 8 à 11 B on a représenté un troisième mode de réalisation d'une boîte d'encastrement 100", ici également de forme globalement circulaire, avec un fond 110", une paroi latérale 120" globalement cylindrique de révolution, qui délimite un logement intérieur, et, à l'opposé du fond 110", une ouverture frontale 130" permettant d'introduire dans ledit logement intérieur au moins un mécanisme d'appareillage.

Le fond 110" comporte des ouvertures 111 "d'entrée de gaines d'amenée de câbles et/ou de conducteurs électriques à l'intérieur de ladite boîte d'encastrement 100" pour la desserte électrique du mécanisme d'appareillage qu'elle contient.

La boîte d'encastrement 100" loge également une bague 200" qui suit le contour circulaire dudit logement intérieur.

Cette bague 200", tout comme la bague 200' et la bague 200, est aménagée pour recevoir des moyens de fixation d'au moins un support d'appareillage 12 et comprenant des moyens de montage coopérant avec des moyens de montage complémentaires portés par ladite paroi latérale 120" pour la fixation de la boîte d'encastrement 100" à une paroi 1.

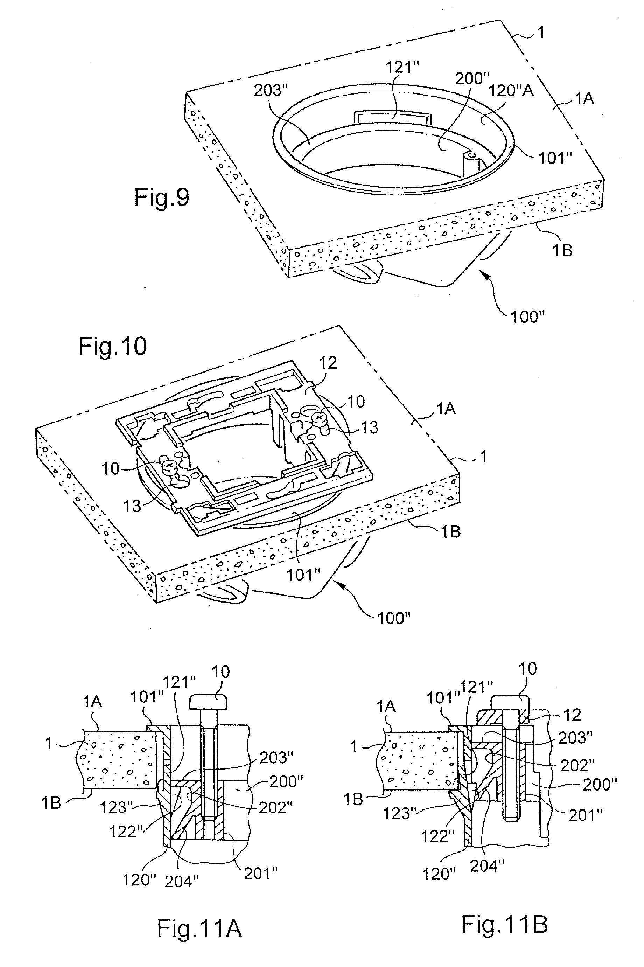

Ici, lesdits moyens de montage sont des moyens d'actionnement aptes actionner des griffes 123" prévues sur la face externe 120"B de ladite paroi latérale 120" pour les positionner en saillie par rapport à une position d'origine (voir figure 11A).

Comme le montre plus particulièrement la figure 8, lesdites griffes 123" sont supportées par des languettes 121" flexibles découpées dans ladite paroi latérale 120". Lesdits moyens d'actionnement sont alors adaptés à agir sur des moyens d'actionnement complémentaires prévus sur lesdites languettes 121" flexibles au dos desdites griffes 123".

Ici, lesdits moyens d'actionnement sont adaptés à agir sur lesdits moyens d'actionnement complémentaires lors d'une translation de la bague 200" suivant l'axe dudit logement.

Lesdits moyens d'actionnement de la bague 200" comprennent une jupe tronconique 204" qui s'étend à la base d'une partie cylindrique 202". La bague 200" comprend à l'opposé de la jupe tronconique 204" un rebord annulaire 203".

Lesdits moyens d'actionnement complémentaires comprennent des nervures 122" présentant une arête dorsale inclinée contre laquelle est destinée à glisser la jupe tronconique 204" de la bague 200 pour sortir les griffes 123" en position en saillie par rapport à une position d'origine.

Par ailleurs, la bague 200" comporte, tout comme la bague 200' et la bague 200, des puits taraudés 201" de réception de vis de fixation d'un support d'appareillage 12.

En référence aux figures 11A et 11 B, la fixation de la boîte d'encastrement 100" à une cloison sèche 1 est réalisée de la manière suivante.

L'installateur réalise à l'aide d'une scie cloche par exemple un trou dont les dimensions correspondent au gabarit de la boîte d'encastrement 100".

Puis, il enfonce la boîte d'encastrement 100" équipée de sa bague 200" dans le trou de la cloison sèche de manière à placer les griffes 123" portées par ladite paroi latérale 120" en regard de la face arrière 1B de la plaque avant 1 de ladite cloison (voir figure 11A).

Dans cette position, le rebord annulaire 101" bordant l'ouverture frontale 130" de la boîte d'encastrement 100" est en appui contre la face avant 1A de la plaque avant 1 de la cloison sèche, la bague 200" est enfoncée dans le logement de la boîte d'encastrement 100" de sorte que son rebord annulaire 203" est en appui contre la tranche des nervures 122" portées par la paroi latérale 120", et la jupe tronconique 204" ne coopère pas avec lesdites nervures 122". Les griffes 123" sont donc positionnées dans leur position d'origine d'attente.

Lors de l'enfoncement de la boîte d'encastrement 100" dans le trou de la cloison sèche, les languettes 121" portant les griffes 123" fléchissent élastiquement et permettent auxdites griffes 123" de se rétracter légèrement vers l'intérieur du logement de ladite boîte d'encastrement 100" pour permettre l'introduction de celle-ci dans ledit trou.

On peut également prévoir selon une variante non représentée que les griffes s'inscrivent dans le gabarit du trou pratiqué dans la cloison sèche et que de ce fait lors de l'enfoncement de la boîte d'encastrement dans ledit trou, elles n'ont pas à se rétracter pour permettre l'introduction de celle-ci dans ce dernier.

Puis, l'installateur positionne le support d'appareillage 12 contre la face avant 1A de la plaque avant 1 de la cloison sèche de sorte que ses ouvertures de fixation 13 viennent se placer en regard des puits taraudés 201" de ladite bague 200".

Il ajuste éventuellement la position angulaire desdits puits taraudés 201" en déplaçant à rotation la bague 200" dans le logement de la boîte d'encastrement 100" pour corriger l'orientation du support d'appareillage 12 par rapport à la cloison.

Puis il visse chaque vis 10 au travers des ouvertures de fixation 13 du support d'appareillage 12 dans lesdits puits taraudés 201" de la bague 200". Cette action de vissage entraîne le déplacement à translation de la bague 200" vers l'extérieur de la boîte d'encastrement 100". La jupe tronconique 204" de la bague 200" coopère alors avec le dos des nervures 122" et fait fléchir élastiquement lesdites languettes 121" pour faire sortir lesdites griffes 123" afin qu'elles viennent se positionner en saillie par rapport à leur position d'origine et se bloquer en appui contre la face arrière 1 B de la plaque avant 1 de la cloison sèche (voir figure 11 B).

En une seule étape de vissage, l'installateur solidarise le support d'appareillage 12 à la boîte d'encastrement 100" et fixe cette dernière à la paroi considérée.

Enfin avantageusement selon l'invention les bagues 200, 200' et 200" sont réalisées d'une seule pièce par moulage d'une matière synthétique.

La présente invention n'est nullement limitée aux modes de réalisation décrits et représentés, mais l'homme du métier saura y apporter toute variante conforme à son esprit.

## Revendications

1. Boîte d'encastrement (100 ;100' ;100") comprenant une paroi latérale (120 ;120' ;120") qui délimite un logement apte à recevoir au moins un mécanisme d'appareillage électrique et des câbles et/ou des conducteurs électriques nécessaires à la desserte dudit mécanisme d'appareillage, **caractérisée en ce que** ladite boîte d'encastrement est équipée, avant insertion dans une paroi, d'une bague (200 ;200' ;200") logée dans ledit logement et aménagée pour recevoir des moyens de fixation (10) d'au moins un support d'appareillage, ladite bague comprenant des moyens de montage (204 ;203' ;204") coopérant avec des moyens de montage complémentaires (121 ;122',123' ;122",123") portés par ladite paroi latérale pour la fixation de la boîte d'encastrement à ladite paroi.

2. Boîte d'encastrement (100) selon la revendication 1, **caractérisée en ce que** lesdits moyens de montage portés par la bague (200) comportent des griffes (204) réparties sur son pourtour, et lesdits moyens de montage complémentaires portés par ladite paroi latérale (120) comprennent des fenêtres (121) au travers desquelles lesdites griffes (204) font saillie de la paroi latérale.

3. Boîte d'encastrement (100) selon la revendication 2, **caractérisée en ce que** chaque fenêtre (121) de ladite paroi latérale (120) présente une largeur et une hauteur supérieures à celles de chaque griffe (204) de ladite bague (200) qu'elle reçoit de sorte que ladite bague (200) est apte à être déplacée à rotation dans ledit logement selon un certain débattement angulaire et également en translation selon l'axe de ladite boîte d'encastrement (100).

4. Boîte d'encastrement (100) selon l'une des revendications 2 ou 3, **caractérisée en ce que** ladite bague (200) est agencée de manière à prendre appui sur un rebord interne (122) prévu sur la face interne (120A) de ladite paroi latérale (120) pour limiter son enfoncement dans ledit logement lorsque ledit support d'appareillage n'est pas fixé à ladite bague.

5. Boîte d'encastrement (100) selon la revendication 4, **caractérisée en ce que** ladite bague (200) porte des pattes (202) dont le bord libre est apte à prendre appui contre ledit rebord interne (122).

6. Boîte d'encastrement (100) selon la revendication 5, **caractérisée en ce que** chaque griffe (204) est portée par une languette découpée dans chaque patte (202) portée par ladite bague (200).

7. Boîte d'encastrement (100) selon l'une des revendications 2 à 6, **caractérisée en ce que** ladite bague (200) comprend ponctuellement au droit desdites griffes (204) des jupes (203) aptes à venir prendre appui sur la face externe (120B) de ladite paroi latérale (120).

8. Boîte d'encastrement (100' ;100") selon la revendication 1, **caractérisée en ce que** lesdits moyens de montage (203' ;204") portés par ladite bague (200' ;200") sont des moyens d'actionnement aptes à actionner des griffes (123' ;123") prévues sur la face externe de ladite paroi latérale (120' ;120") pour les positionner en saillie par rapport à une position d'origine.

9. Boîte d'encastrement (100' ;100") selon la revendication 8, **caractérisée en ce que** lesdites griffes (123' ;123") sont supportées par des languettes flexibles (121' ;121") découpées dans ladite paroi latérale (120' ;120").

10. Boîte d'encastrement (100' ;100") selon la revendication 9, **caractérisée en ce que** lesdits moyens d'actionnement (203' ;204") sont adaptés à agir sur des moyens d'actionnement complémentaires (122' ;122") prévus sur lesdites languettes flexibles (121' ;121") au dos desdites griffes (123' ;123").

11. Boîte d'encastrement (100') selon l'une des revendications 8 à 10, **caractérisée en ce que** lesdits moyens d'actionnement (203') sont adaptés à agir sur lesdits moyens d'actionnement complémentaires (122') lors d'une rotation de la bague (200') autour de l'axe dudit logement.

12. Boîte d'encastrement (100') selon la revendication 11, **caractérisée en ce que** lesdits moyens d'actionnement (203') et lesdits moyens d'actionnement complémentaires (122') comprennent des rampes de came.

13. Boîte d'encastrement (100') selon la revendication 12, **caractérisée en ce que** lesdites rampes de came (203') sont prévues aux extrémités de pattes (202') qui s'étendent à partir de ladite bague (200') perpendiculairement à celle-ci et qui sont réparties sur son pourtour.

14. Boîte d'encastrement (100") selon l'une des revendications 8 à 10, **caractérisée en ce que** lesdits moyens d'actionnement (204") sont adaptés à agir sur lesdits moyens d'actionnement complémentaires (122") lors d'une translation de la bague (200") suivant l'axe dudit logement.

15. Boîte d'encastrement selon la revendication 14, **caractérisée en ce que** lesdits moyens d'actionnement comprennent une jupe tronconique.

16. Boîte d'encastrement (100") selon la revendication 15, **caractérisée en ce que** lesdits moyens d'actionnement complémentaires (122") comprennent des nervures.

17. Boîte d'encastrement (100 ;100' ;100") selon l'une quelconque des revendications précédentes, **caractérisée en ce que** lesdits aménagements de la bague (200 ;200' ;200") adaptés à recevoir les moyens de fixation d'un support d'appareillage comprennent au moins deux puits taraudés (201 ;201' ;201") de réception de vis.

18. Boîte d'encastrement (100 ;100' ;100") selon l'une quelconque des revendications précédentes, **caractérisée en ce que** la bague (200 ;200' ;200") suit le contour dudit logement.

19. Boîte d'encastrement (100 ;100' ;100") selon l'une quelconque des revendications précédentes, **caractérisée en ce que** la bague (200 ;200' ;200") est réalisée d'une seule pièce par moulage d'une matière synthétique.

20. Boîte d'encastrement (100 ;100' ;100") selon l'une quelconque des revendications précédentes, **caractérisée en ce que** la bague et la boîte d'encastrement sont réalisées d'une seule pièce par moulage d'une matière synthétique et sont reliées l'une à l'autre en sortie de moulage par au moins un lien frangible.
